# FASCICULE DE BREVET EUROPEEN

(11) **EP 1 346 546 B1**
(45) Date de publication et mention de la délivrance du brevet: **15.08.2007**
(21) Numéro de dépôt: 01995788.5
(22) Date de dépôt: 24.12.2001
(51) Int. Cl.: H04L 29/06

(54) **PROCEDE POUR RESTREINDRE L'ACCES A DES RESSOURCES APPARTENANT A DES SERVICES INTERACTIFS D'AU MOINS UN BOUQUET**
VERFAHREN ZUR ZUGRIFFSBESCHRÄNKUNG FÜR INTERAKTIVE-DIENSTRESSOURCEN AUF MINDESTENS EINE BOUQUET
METHOD OF RESTRICTING ACCESS, FOR THE BENEFIT OF AUTHORISED USERS, TO RESOURCES BELONGING TO INTERACTIVE SERVICES WITH AT LEAST ONE PACKAGE OF SERVICES

(30) Priorité: 29.12.2000 FR 0017324
(43) Date de publication de la demande: 24.09.2003
(73) Titulaire: VALIDY, 26100 Romans sur Isère (FR)
(72) Inventeur: CUENOD, Jean-Christophe, F-78360 Montesson (FR); SGRO, Gilles, F-26300 Bourg de Péage (FR)
(74) Mandataire: Thibault, Jean-Marc
(86) Numéro de dépôt international: PCT/FR2001/004190
(87) Numéro de publication internationale: WO 2002/054703

(56) Documents cités:
- WO-A-99/13438
- FR-A- 2 779 856

## Description

L'objet de l'invention concerne le domaine des moyens techniques adaptés pour restreindre l'accès à des ressources appartenant à des services interactifs faisant partie d'au moins un bouquet de services.

Dans l'état de la technique, il est connu par les documents FR 2 779 856 et WO 99/13438, qu'un utilisateur de machines de type ordinateur connectées en réseau avec des machines serveurs, utilisent des cartes à puce pour assurer la facturation à des services accessibles sur les machines serveurs.

L'objet de l'invention trouve une application particulièrement avantageuse dans le domaine de l'accès restreint à des ressources appartenant à des services interactifs. A titre d'exemple non limitatif, il peut être envisagé des services interactifs comme la consultation de comptes bancaires, la consultation d'informations juridiques et/ou commerciales sur les sociétés, la consultation d'horoscopes, les jeux interactifs en ligne, etc. Ces services interactifs comprennent des ressources à accès restreint. Par exemple, pour un service relatif à la consultation de comptes bancaires, une ressource à accès restreint est l'affichage d'un compte bancaire qui est accessible uniquement au titulaire du compte.

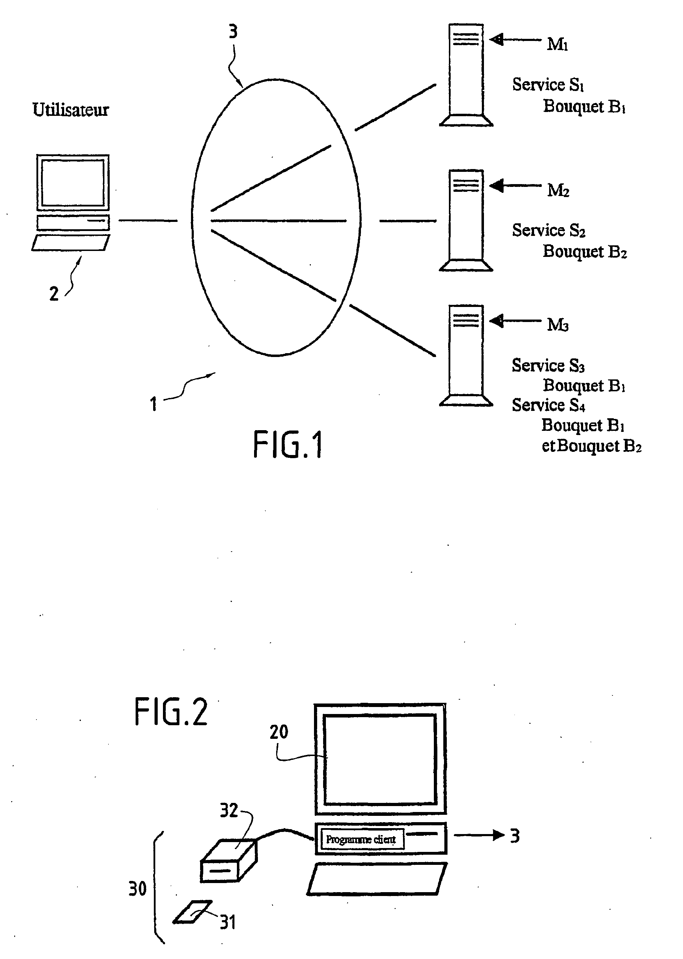

Pour illustrer l'objet de l'invention, la **fig. 1** montre un exemple d'une installation **1** permettant à des utilisateurs d'accéder à des services interactifs faisant partie d'au moins un groupe ou bouquet. L'installation **1** comporte pour chaque utilisateur, une machine cliente **2** permettant d'exécuter un programme client adapté pour échanger, à partir d'un réseau de transmission **3**, des données avec un programme serveur associé à chaque service interactif. De manière simplifiée, chaque programme serveur d'un service interactif est exécuté par une machine serveur reliée au réseau de transmission **3**. A titre d'exemple non limitatif, chaque machine cliente **2** peut être un ordinateur personnel, le programme client peut être un logiciel du type navigateur Internet, le réseau de transmission **3** peut être l'Internet ou un Intranet, le programme serveur peut être un serveur web, et la machine serveur peut être un serveur de type informatique.

Dans la suite de la description, les services interactifs seront désignés par des identifiants de services **Sᵢ**, (avec **i** variant de 1 à I), les bouquets seront désignés par des identifiants de bouquets **Bⱼ**, (avec **j** variant de 1 à J), et les machines serveurs seront désignées par des identifiants de machines **Mₖ**, (avec **k** variant de 1 à K).

Dans l'exemple illustré, des services interactifs ayant comme identifiants de services **S₁, S₂, S₃** et **S₄,** sont accessibles respectivement à partir des machines serveurs ayant comme identifiants de machines **M₁, M₂, M₃** et **M₃.** De plus, le service interactif ayant comme identifiant de service S**₁** fait partie du bouquet ayant comme identifiant de bouquet **B₁,** le service interactif ayant comme identifiant de service **S₂** fait partie du bouquet ayant comme identifiant de bouquet **B₂,** le service interactif ayant comme identifiant de service **S₃** fait partie du bouquet ayant comme identifiant de bouquet **B₁** et le service interactif ayant comme identifiant de service **S₄** fait partie des deux bouquets ayant comme identifiants de bouquets **B₁** et **B₂.** En d'autres termes, chaque utilisateur désirant accéder à l'un des services interactifs ayant comme identifiants de services **S₁, S₂, S₃** ou **S₄** appartenant respectivement au(x) bouquet(s) ayant comme identifiants de bouquets **B₁, B₂, B₁, B₁** et **B₂,** doit adresser une requête respectivement à la machine serveur ayant comme identifiant de machine M₁, M₂, M₃ ou M₃.

Pour certaines applications, il apparaît le besoin de restreindre au profit d'utilisateurs autorisés, l'accès à des services interactifs ou au moins à certaines des ressources de ces services. Ainsi, un fournisseur d'un service interactif peut rendre accessible au moins certaines ressources de son service interactif au profit d'utilisateurs ayant reçu une autorisation ou un droit d'accès. Une telle autorisation peut être attribuée à un utilisateur en contrepartie, par exemple, d'un abonnement au service, gratuit ou onéreux.

Pour satisfaire le besoin exprimé ci-dessus, il apparaît nécessaire d'authentifier de manière sûre, un utilisateur ayant envoyé une requête d'accès à une ressource à accès restreint d'un service et d'autoriser l'accès à cette ressource uniquement si l'utilisateur possède une autorisation.

L'objet de l'invention vise donc à satisfaire ce besoin d'authentification en proposant un procédé pour permettre l'accès à des ressources à accès restreint de services interactifs appartenant à au moins un bouquet, uniquement au profit d'utilisateurs autorisés.

Pour atteindre cet objectif, l'objet de l'invention concerne un procédé pour restreindre, au profit d'utilisateurs autorisés, l'accès à au moins une ressource appartenant à au moins un service interactif d'au moins un bouquet de services, chaque utilisateur disposant d'une machine cliente apte à exécuter un programme client adapté pour échanger à partir d'un réseau de transmission, des données avec un programme serveur associé à chaque service interactif possédant un identifiant de service, l'accès à une ressource étant assuré par une requête émise par le programme client vers le programme serveur qui traite cette requête et renvoie au programme client la réponse à la requête.

Le procédé selon l'invention comporte les étapes suivantes :
→ pour chaque bouquet, relier une unité de traitement et de mémorisation destinée à être reliée à la machine cliente de l'utilisateur lorsque ce dernier souhaite accéder à au moins une ressource à accès restreint, l'unité de traitement et de mémorisation comportant :
   - un identifiant de bouquet permettant de déterminer le bouquet auquel appartient l'unité de traitement et de mémorisation,
   - un identifiant d'unité de traitement et de mémorisation permettant de caractériser l'unité de traitement et de mémorisation mis à la disposition de l'utilisateur,
   - et une clé de décryptage permettant le décryptage d'informations en provenance d'un service du bouquet,
→ permettre à chaque programme client, de lire dans l'unité de traitement et de mémorisation qui lui est reliée :
   - l'identifiant de bouquet,
   - et l'identifiant d'unité de traitement et de mémorisation,
→ envoyer par chaque programme serveur pour un service, au moins une fois à tout programme client qui lui a adressé une requête pour ce service, une liste d'identifiants de bouquets permettant de déterminer à quel(s) bouquet(s) appartient le service auquel la requête a été adressée,
→ mémoriser par chaque programme client qui reçoit une liste d'identifiants de bouquets en réponse à une requête pour un service possédant un identifiant de service, une relation entre chaque identifiant de bouquet et l'identifiant du service concerné,
→ déterminer, lors de l'émission d'une requête vers un service possédant un identifiant de service, si le programme client a mémorisé au moins une relation entre un identifiant de bouquet et l'identifiant du service concerné, et dans le cas où :
   - un identifiant de bouquet est trouvé, à comparer cet identifiant de bouquet avec l'identifiant de bouquet venant de l'unité de traitement et de mémorisation et s'il y a égalité, à rajouter à la requête émise par le programme client, l'identifiant de l'unité de traitement et de mémorisation,
→ lorsqu'un programme serveur reçoit une requête pour un service contenant un identifiant d'unité de traitement et de mémorisation et qui demande d'accéder à une ressource à accès restreint, déterminer en utilisant au moins l'identifiant du service concerné et l'identifiant d'unité de traitement et de mémorisation, si l'utilisateur possédant l'unité de traitement et de mémorisation est habilité à accéder à ladite ressource, et si l'utilisateur :
   - n'est pas habilité à accéder à la ressource, à renvoyer au programme client par le programme serveur, une réponse correspondant à un accès refusé,
   - est habilité à accéder à la ressource :
      - à déterminer en se servant au moins de l'identifiant d'unité de traitement et de mémorisation, la clé d'encryptage correspondant à la clé de décryptage contenue dans l'unité de traitement et de mémorisation reliée à la machine cliente de l'utilisateur ayant envoyé la requête,
      - à encrypter par le programme serveur, au moins en partie, la réponse à la requête d'accès à la ressource à accès restreint en utilisant la clé d'encryptage, de manière à obtenir une réponse cryptée,
      - et à renvoyer au programme client par le programme serveur, cette réponse cryptée,
→ et lorsqu'un programme client reçoit une réponse cryptée :
   - décrypter la réponse cryptée reçue par le programme client en utilisant la clé de décryptage contenue dans l'unité de traitement et de mémorisation qui lui est reliée,
   - et présenter à l'utilisateur la réponse à sa requête, comme si celle-ci lui était arrivée non cryptée.

Un autre objet de l'invention vise à satisfaire ce besoin d'authentification en proposant un procédé permettant l'accès à des ressources à accès restreint faisant partie de services interactifs appartenant à au moins deux bouquets.

Pour atteindre un tel objectif, le procédé selon l'invention consiste
→ à déterminer, lors de l'émission d'une requête vers un service, si le programme client a mémorisé au moins une relation entre un identifiant de bouquet et l'identifiant du service concerné, et dans le cas où :
   - plusieurs identifiants de bouquets sont trouvés, à comparer ces identifiants de bouquets avec l'identifiant de bouquet venant de l'unité de traitement et de mémorisation et si une égalité est trouvée, à rajouter l'identifiant de bouquet à la requête émise par le programme client et contenant déjà l'identifiant de l'unité de traitement et de mémorisation,
→ lorsqu'un programme serveur reçoit une requête pour un service contenant un identifiant d'unité de traitement et de mémorisation et un identifiant de bouquet et qui demande d'accéder à une ressource à accès restreint, à déterminer en utilisant au moins l'identifiant de bouquet, l'identifiant du service concerné et l'identifiant de l'unité de traitement et de mémorisation si l'utilisateur possédant l'unité de traitement et de mémorisation est habilité à accéder à ladite ressource, et si l'utilisateur :
   - n'est pas habilité à accéder à la ressource, à renvoyer au programme client par le programme serveur, une réponse correspondant à un accès refusé,
   - est habilité à accéder à la ressource :
      - à déterminer en se servant au moins de l'identifiant de bouquet et de l'identifiant d'unité de traitement et de mémorisation, la clé d'encryptage correspondant à la clé de décryptage contenue dans l'unité de traitement et de mémorisation reliée à la machine cliente de l'utilisateur ayant envoyé la requête,
      - à encrypter par le programme serveur, au moins en partie, la réponse à la requête d'accès à la ressource à accès restreint en utilisant la clé d'encryptage, de manière à obtenir une réponse cryptée,
      - et à renvoyer au programme client par le programme serveur, cette réponse cryptée.

Un autre objet de l'invention vise à proposer une unité de traitement et de mémorisation permettant à un utilisateur d'accéder, par une machine cliente dite du type ordinateur, à au moins une ressource appartenant à au moins un service interactif faisant partie d'au moins un bouquet de services. Selon l'invention, elle comporte au moins :
- des moyens de mémorisation d'un identifiant de bouquet permettant de déterminer le bouquet auquel appartient l'unité de traitement et de mémorisation,
- des moyens de mémorisation d'un identifiant d'unité de traitement et de mémorisation permettant de caractériser l'unité de traitement et de mémorisation mis à la disposition de l'utilisateur,
- et des moyens de mémorisation d'une clé de décryptage permettant le décryptage d'informations en provenance d'un service du bouquet.

Un autre objet de l'invention vise à proposer une machine cliente de type ordinateur comportant des moyens pour mettre en oeuvre les étapes de procédé conforme à l'invention.

Un autre objet de l'invention vise à proposer une machine serveur de type informatique comportant des moyens pour mettre en oeuvre les étapes de procédé conforme à l'invention.

Un autre objet de l'invention vise à proposer un programme client d'accès à au moins une ressource à accès restreint appartenant à au moins un service interactif, comprenant des instructions pour effectuer les étapes du procédé conforme à l'invention, lorsque ledit programme client est exécuté sur une machine cliente.

Un autre objet de l'invention vise à proposer un programme serveur pour service interactif comprenant des instructions pour effectuer les étapes du procédé conforme à l'invention, lorsque ledit programme serveur est exécuté sur une machine serveur.

Diverses autres caractéristiques ressortent de la description faite ci-dessous en référence aux dessins annexés qui montrent, à titre d'exemples non limitatifs, des formes de réalisation et de mise en oeuvre de l'objet de l'invention.

La **fig. 2** montre une machine cliente permettant de mettre en oeuvre le procédé selon l'invention.

La **fig. 3** montre la séquence d'échange de données entre le programme client de l'utilisateur et le programme serveur du service dans le cas où le procédé selon l'invention permet l'accès à un service appartenant à un bouquet.

La **fig. 4** montre la séquence d'échange de données entre le programme client de l'utilisateur et le programme serveur du service dans le cas où le procédé selon l'invention permet l'accès à un service appartenant simultanément à plusieurs bouquets de services.

L'objet de l'invention concerne un procédé permettant à des utilisateurs autorisés, d'accéder à au moins une ressource à accès restreint appartenant à au moins un service interactif Pour la mise en oeuvre du procédé selon l'invention, chaque utilisateur dispose, tel qu'illustré à la **fig. 2,** d'une machine cliente **20** permettant d'exécuter un programme client d'accès à des services interactifs comme expliqué à la **fig. 1.**

Conformément à l'invention, ce programme client doit comporter des fonctionnalités supplémentaires par rapport à un classique programme client d'accès.

Comme fonctionnalité supplémentaire, le programme client doit posséder la possibilité d'échanger des données avec une unité de traitement et de mémorisation 30. L'unité de traitement et de mémorisation **30** comporte des moyens de transfert et des moyens de traitement et de mémorisation. Il doit être considéré que les moyens de transfert sont de nature logicielle et/ou matérielle et sont aptes à assurer et à optimiser la communication de données entre la machine cliente **20** et l'unité de traitement et de mémorisation **30**.

Cette unité de traitement et de mémorisation **30** est capable :
- à l'aide des moyens de transfert :
   - d'accepter des données fournies par la machine cliente **20**,
   - et de restituer des données à la machine cliente **20**,
- à l'aide des moyens de traitement et de mémorisation :
   - de stocker des données éventuellement de manière secrète et de conserver au moins une partie de celles-ci même lorsque l'unité de traitement et de mémorisation **30** est hors tension,
   - et d'effectuer du traitement algorithmique sur des données, une partie ou la totalité de ce traitement pouvant être secret.

A titre d'exemple non limitatif, cette unité de traitement et de mémorisation **30** peut être constituée par une clé matérielle sur le bus USB de la machine cliente **20** ou, de préférence, par une carte à puce **31** et son interface **32** communément appelé lecteur de carte relié à la machine cliente **20**.

Dans le cas où l'unité de traitement et de mémorisation **30** est constituée par une carte à puce **31** et son interface **32**, les moyens de transfert sont décomposés en deux parties dont l'une se trouve sur l'interface **32** et dont l'autre se trouve sur la carte à puce **31**. Dans cet exemple de réalisation, l'absence de la carte à puce **31** est considérée comme équivalente à l'absence de l'unité de traitement et de mémorisation **30**, dans la mesure où les moyens de traitement et de mémorisation contenus dans la carte à puce **31** sont absents.

Le procédé selon l'invention consiste à mettre à la disposition de chaque utilisateur, pour chaque bouquet ayant comme identifiant de bouquet **Bⱼ**, une unité de traitement et de mémorisation **30** permettant d'accéder aux ressources à accès restreint du ou des services interactifs ayant comme identifiant de service **Sᵢ** faisant partie du bouquet. Dans le cas où un utilisateur souhaite accéder à deux bouquets de services, comme illustré à la **fig. 1,** cet utilisateur doit disposer d'une première unité de traitement et de mémorisation pour l'accès aux services interactifs du bouquet ayant comme identifiant de bouquet **B₁** et d'une deuxième unité de traitement et de mémorisation pour l'accès aux services interactifs du bouquet ayant comme identifiant de bouquet **B₂**.

Chaque unité de traitement et de mémorisation **30** comporte :
- un identifiant de bouquet **BU** permettant de déterminer le bouquet auquel appartient l'unité de traitement et de mémorisation **30 ;**
- un identifiant d'unité de traitement et de mémorisation **UTM** permettant de caractériser l'unité de traitement et de mémorisation **30** mise à la disposition de l'utilisateur. De façon classique, cet identifiant d'unité de traitement et de mémorisation **UTM** correspond, par exemple à un numéro d'identification de l'unité de traitement et de mémorisation **30** ;
- et une clé de décryptage **KD** permettant le décryptage d'informations en provenance d'un service interactif du bouquet.

Comme fonctionnalité supplémentaire, le programme client doit posséder la possibilité d'échanger des données d'identification supplémentaires avec des machines serveurs.

Comme fonctionnalité supplémentaire, le programme client qui reçoit une liste d'identifiants de bouquet dans la réponse à une de ses requêtes, doit posséder la possibilité de mémoriser des relations entre l'identifiant du service auquel la requête était adressée et chacun des identifiants de bouquet de la liste.

Comme fonctionnalité supplémentaire, le programme client doit posséder la possibilité de décrypter avec l'aide de l'unité de traitement et de mémorisation 30, des informations cryptées en provenance des machines serveurs.

Pour la mise en oeuvre du procédé selon l'invention, chaque programme serveur d'un service interactif exécuté par une machine serveur comporte des fonctionnalités supplémentaires par rapport à un programme serveur classique ne mettant pas en oeuvre le procédé selon l'invention.

Comme fonctionnalité supplémentaire, chaque programme serveur pour un service dispose d'une liste d'identifiants de bouquets **BSⱼ** permettant de déterminer à quel(s) bouquet(s) appartient le service interactif. Lorsqu'une requête est adressée au service, le programme serveur pour ce service envoie dans la réponse, cette liste d'identifiants de bouquets. Dans le cas de la **fig. 1**, par exemple le service interactif ayant comme identifiant **S₁** renvoie la liste {**B₁**} et le service interactif ayant comme identifiant **S₄** renvoie la liste {**B₁, B₂**}.

Comme fonctionnalité supplémentaire, chaque programme serveur d'un service interactif exécuté sur une machine serveur détermine si un utilisateur possédant une unité de traitement et de mémorisation ayant comme identifiant d'unité de traitement et de mémorisation **UTM**, est habilité à accéder à une ressource à accès restreint. Ainsi, le programme serveur autorise ou refuse l'accès à cette ressource à accès restreint et si l'accès est autorisé, encrypte au moins en partie la réponse à la requête.

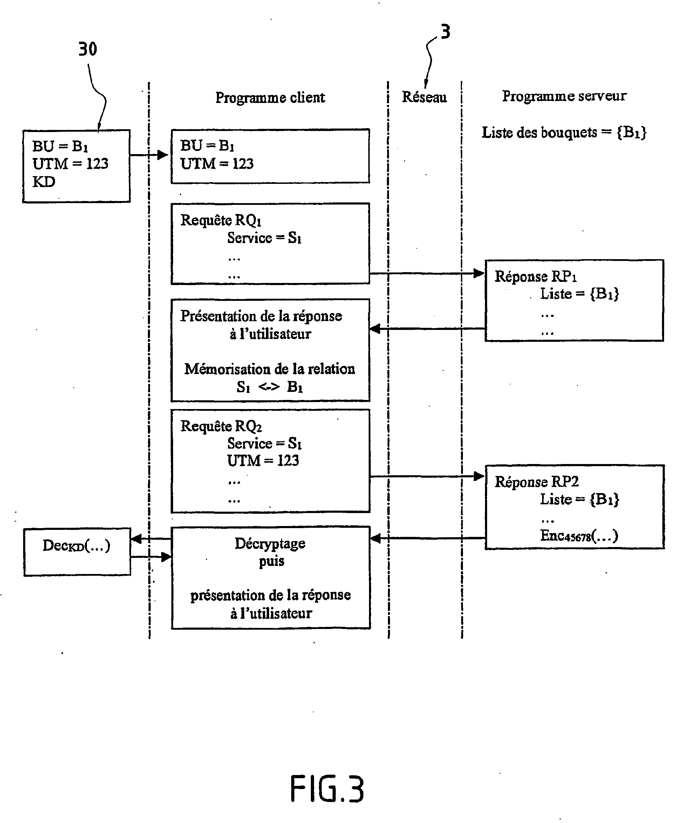

La description qui suit en relation de la **fig. 3** permet d'expliciter le procédé selon l'invention permettant à un utilisateur l'accès à un service interactif appartenant à un seul bouquet à la fois. Dans l'exemple illustré, il est considéré que l'utilisateur souhaite accéder au service interactif ayant comme identifiant de service S₁ appartenant au bouquet ayant comme identifiant de bouquet **B₁**.

Un utilisateur souhaitant accéder à une ressource appartenant au service interactif ayant comme identifiant de service **S₁**, doit disposer d'une unité de traitement et de mémorisation **30** correspondant à l'accès à ce service, c'est-à-dire d'une unité de traitement et de mémorisation associée au bouquet ayant comme identifiant de bouquet **B₁.**

Lorsque l'unité de traitement et de mémorisation **30** est reliée à la machine cliente **20**, le programme client correspondant lit dans l'unité de traitement et de mémorisation qui lui est relié :
- l'identifiant de bouquet **BU.** Dans l'exemple considéré, **BU** est égal à **B₁.**
- et l'identifiant de l'unité de traitement et de mémorisation **UTM**. Dans l'exemple considéré, **UTM** est égal à 123.

Le programme client adresse au programme serveur pour le service ayant comme identifiant de service **S₁,** une première requête **RQ₁.** Dans la mesure où le programme client ne sait pas encore si le programme serveur appartient à un bouquet de service, la requête envoyée est une requête standard identique à celle qu'envoie un programme client standard.

Le programme serveur pour le service ayant reçu la requête d'accès **RQ₁** envoie au moins une fois dans la réponse **RP₁,** au programme client qui lui a adressé la requête **RQ₁,** la liste d'identifiants de bouquets **BSⱼ.** Dans l'exemple considéré, la liste est constituée par un seul élément et se trouve donc représentée par **{B₁}.**

Le programme client qui reçoit la réponse **RP₁** contenant au moins une liste d'identifiants de bouquets **BSⱼ,** mémorise une relation entre l'identifiant du service Sᵢ correspondant au service auquel la requête **RQ₁** a été adressée et chaque identifiant de bouquet **BSⱼ.** Dans l'exemple illustré, la liste compte un seul élément et le programme client mémorise une relation entre l'identifiant de service **S₁** et l'identifiant de bouquet **B₁.**

Lorsque l'utilisateur souhaite accéder de nouveau au service interactif ayant comme identifiant de service **Sᵢ**, le programme client prépare une deuxième requête d'accès **RQ₂**. Lors de l'établissement de cette deuxième requête d'accès **RQ₂**, le programme client détermine s'il a mémorisé au moins une relation entre l'identifiant du service concerné **Sᵢ** et un identifiant de bouquet **BSⱼ**.

Dans le cas où aucune relation n'est trouvée, le programme client émet une requête similaire à la requête **RQ₁**. Dans le cas où un identifiant de bouquet **BSⱼ** est trouvé, le programme client compare cet identifiant de bouquet **BSⱼ** avec l'identifiant de bouquet **BU** venant de l'unité de traitement et de mémorisation. S'il n'y a pas égalité entre l'identifiant de bouquet **BSⱼ** et l'identifiant de bouquet **BU,** le programme client émet une requête similaire à la requête **RQ₁.** S'il y a égalité entre l'identifiant de bouquet BSⱼ et l'identifiant de bouquet **BU,** le programme client rajoute à sa requête **RQ₂,** l'identifiant de l'unité de traitement et de mémorisation UTM.

Dans l'exemple illustré, lors de l'émission de la requête **RQ₂** vers le service interactif ayant comme identifiant de service **S₁**, le programme client détecte qu'il a mémorisé une relation entre **S₁** et **B₁**, de sorte qu'il compare B₁ avec l'identifiant de bouquet BU venant de son unité de traitement et de mémorisation. Comme l'unité de traitement et de mémorisation contient aussi l'identifiant de bouquet **B₁,** le programme client rajoute à sa requête **RQ₂**, l'identifiant de l'unité de traitement et de mémorisation **UTM** qui, dans l'exemple, est égal à 123.

Lorsque le programme serveur reçoit une requête **RQ₂** contenant un identifiant d'unité de traitement et de mémorisation **UTM** et correspondant à une demande d'accès à une ressource à accès restreint, le programme serveur détermine si l'utilisateur possédant l'unité de traitement et de mémorisation est habilité ou non à accéder à la ressource à accès restreint. Le programme serveur détermine cette autorisation en utilisant au moins l'identifiant de service **Sᵢ** correspondant au service demandé et l'identifiant de l'unité de traitement et de mémorisation **UTM**. Pour ce faire, le programme serveur consulte, par exemple, une base de données comportant pour le service considéré la liste des identifiants d'unité de traitement et de mémorisation **UTM** autorisés pour l'accès à la ressource à accès restreint demandée.

Dans le cas où le programme serveur conclut que l'utilisateur n'est pas habilité à accéder à la ressource à accès restreint, le programme serveur envoie au programme client une réponse **RP₂** correspondant à un accès refusé.

Dans le cas où le programme serveur conclut que l'utilisateur est habilité à accéder à la ressource à accès restreint, il est procédé à la détermination d'une clé d'encryptage **KE** correspondant à la clé de décryptage **KD** contenue dans l'unité de traitement et de mémorisation ayant comme identifiant d'unité de traitement et de mémorisation **UTM.** Cette clé d'encryptage **KE** est déterminée en se servant au moins de l'identifiant de l'unité de traitement et de mémorisation **UTM**.

Le programme serveur encrypte ensuite au moins en partie, la réponse à la requête d'accès à la ressource à accès restreint en utilisant la clé d'encryptage **KE**, de manière à obtenir une réponse cryptée **RP₂**. Le programme serveur renvoie ensuite au programme client, cette réponse cryptée **RP₂.** Il doit être compris que lorsque le programme serveur encrypte au moins en partie une réponse, ce programme serveur encrypte généralement de manière préférentielle, au moins en partie le contenu de cette réponse.

Dans l'exemple illustré, le programme serveur détecte dans la requête **RQ₂**, la présence d'un identifiant d'unité de traitement et de mémorisation à savoir **UTM** = 123. Comme il se trouve que la requête **RQ₂** correspond à une demande d'accès à une ressource à accès restreint, le programme serveur détermine grâce au moins à l'identifiant de service **S₁** et à l'identifiant d'unité de traitement et de mémorisation 123, que l'accès est autorisé. Le programme serveur détermine alors la clé d'encryptage **KE** en se servant au moins de l'identifiant d'unité de traitement et de mémorisation 123. Par exemple, la clé d'encryptage **KE** est égale à 45678. Le programme serveur encrypte grâce à cette clé **KE**, au moins en partie la réponse à la requête d'accès **RQ₂**.

Lorsque le programme client reçoit la réponse cryptée **RP₂**, le programme client décrypte cette réponse cryptée avec l'aide de la clé de décryptage **KD** contenue dans l'unité de traitement et de mémorisation qui lui est reliée. Le programme client présente alors à l'utilisateur, la réponse à sa requête comme si elle lui était arrivée non cryptée.

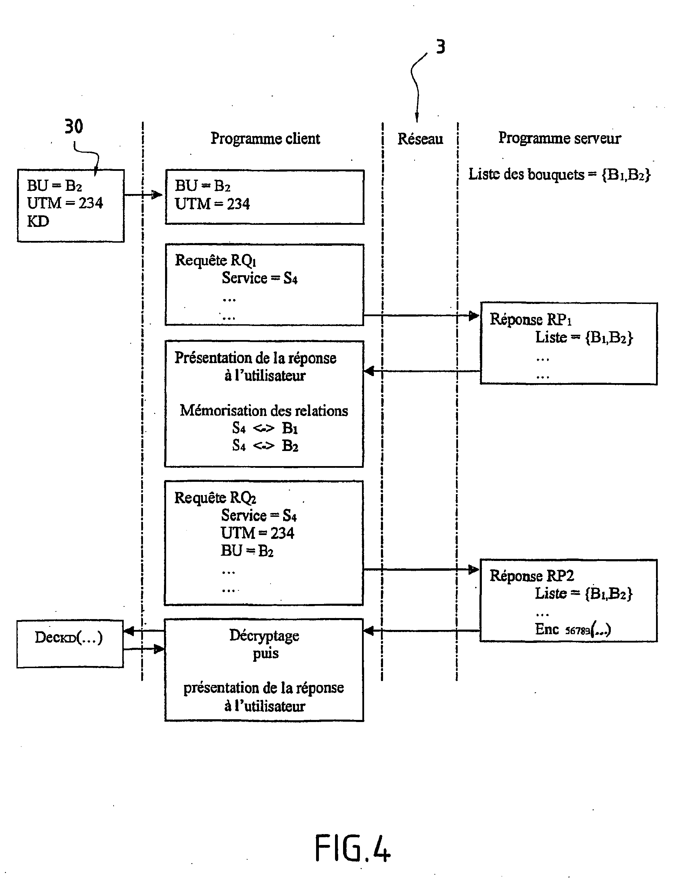

Dans l'exemple décrit à la **fig. 3**, le procédé selon l'invention permet à un utilisateur l'accès à un service interactif appartenant à un seul bouquet à la fois. La **fig. 4** permet d'expliciter le procédé selon l'invention permettant à un utilisateur l'accès à un service interactif appartenant simultanément à plusieurs bouquets de services. Dans l'exemple illustré, il est considéré que l'utilisateur souhaite accéder au service interactif ayant comme identifiant de service **S₄,** faisant partie des deux bouquets ayant comme identifiants de bouquets **B₁** et **B₂.**

Un utilisateur souhaitant accéder à une ressource appartenant au service interactif ayant comme identifiant de service **S₄,** doit disposer pour au moins un des bouquets **B₁** ou **B₂**, d'une unité de traitement et de mémorisation **30** permettant l'accès à ce bouquet. Dans l'exemple de la **fig. 4,** il est supposé que l'utilisateur dispose au moins d'une unité de traitement et de mémorisation associée au bouquet ayant comme identifiant de bouquet B₂. (La description serait similaire si l'utilisateur disposait d'une unité de traitement et de mémorisation associée au bouquet ayant comme identifiant de bouquet **B_{1.})**

Lorsque l'unité de traitement et de mémorisation **30** est reliée à la machine cliente **20**, le programme client correspondant lit dans l'unité de traitement et de mémorisation qui lui est relié :
- l'identifiant de bouquet **BU.** Dans l'exemple considéré, **BU** est égal à **B₂;**
- et l'identifiant de l'unité de traitement et de mémorisation **UTM**. Dans l'exemple considéré, **UTM** est égal à 234.

Après l'envoi par le programme client, d'une première requête **RQ₁** pour le service interactif ayant comme identifiant de service S₄ au programme serveur pour ce service, ledit programme serveur pour le service ayant reçu la requête d'accès **RQ₁,** envoie au moins une fois dans la réponse **RP₁,** au programme client qui lui a adressé la requête **RQ₁,** la liste d'identifiants de bouquets **BSⱼ.** Dans l'exemple considéré, la liste est constituée par deux éléments et se trouve donc représentée par **{B₁, B₂}**

Le programme client qui reçoit la réponse **RP₁** contenant au moins une liste d'identifiants de bouquets **BSⱼ,** mémorise une relation entre l'identifiant du service **Sᵢ** correspondant au service auquel la requête **RQ₁** a été adressée et chaque identifiant de bouquet **BSⱼ.** Dans l'exemple considéré, la liste compte deux éléments et le programme client mémorise, d'une part, une relation entre l'identifiant de service **S₄** et l'identifiant de bouquet **B₁** et, d'autre part, une relation entre l'identifiant de service **S₄** et l'identifiant de bouquet **B₂**.

Lorsque l'utilisateur souhaite accéder de nouveau au service interactif ayant comme identifiant de service **Sᵢ**, le programme client prépare une deuxième requête d'accès **RQ₂.** Lors de l'établissement de cette deuxième requête d'accès **RQ₂,** le programme client détermine s'il a mémorisé au moins une relation entre l'identifiant du service concerné **Sᵢ** et un identifiant de bouquet **BSⱼ.**

Dans le cas où aucune relation n'est trouvée, le programme client émet une requête similaire à la requête **RQ₁**. Dans le cas où un ou plusieurs identifiants de bouquets **BSⱼ** sont trouvés, le programme client compare ce ou ces identifiants de bouquets **BSⱼ** avec l'identifiant de bouquet **BU** venant de l'unité de traitement et de mémorisation. S'il n'y a pas d'égalité entre le ou les identifiants de bouquet **BSⱼ** et l'identifiant de bouquet **BU**, le programme client émet une requête similaire à la requête **RQ₁**. Si une égalité est trouvée entre un identifiant de bouquet **BSⱼ** et l'identifiant de bouquet **BU,** le programme client rajoute à sa requête **RQ₂**, l'identifiant de l'unité de traitement et de mémorisation **UTM** et l'identifiant de bouquet **BU.**

Dans l'exemple illustré, lors de l'émission de la requête **RQ₂** vers le service interactif ayant comme identifiant de service **S₄**, le programme client détecte qu'il a mémorisé une relation entre **S₄** et **B₁** et une relation entre **S₄** et **B₂**. Le programme client compare alors l'identifiant de bouquet **BU** venant de son unité de traitement et de mémorisation, avec respectivement les identifiants de bouquet **B₁** et **B₂**. Comme l'unité de traitement et de mémorisation reliée à la machine client contient l'identifiant de bouquet **B₂**, le programme client rajoute à sa requête **RQ₂** l'identifiant de l'unité de traitement et de mémorisation **UTM** et l'identifiant de bouquet **BU**, qui dans l'exemple sont respectivement égaux à 234 et **B₂.**

Lorsque le programme serveur reçoit une requête **RQ₂** contenant un identifiant d'unité de traitement et de mémorisation **UTM** et un identifiant de bouquet **BU**, et correspondant à une demande d'accès à une ressource à accès restreint, le programme serveur détermine si l'utilisateur possédant l'unité de traitement et de mémorisation est habilité ou non à accéder à la ressource à accès restreint. Le programme serveur détermine cette autorisation en utilisant au moins l'identifiant de bouquet **BU**, l'identifiant de service **Sᵢ** correspondant au service demandé et l'identifiant de l'unité de traitement et de mémorisation **UTM**.

Dans le cas où le programme serveur conclut que l'utilisateur n'est pas habilité à accéder à la ressource à accès restreint, le programme serveur envoie au programme client une réponse **RP₂** correspondant à l'accès refusé.

Dans le cas où le programme serveur conclut que l'utilisateur est habilité à accéder à la ressource à accès restreint, il est procédé à la détermination d'une clé d'encryptage **KE** correspondant à la clé de décryptage **KD** contenue dans l'unité de traitement et de mémorisation ayant comme identifiant d'unité de traitement et de mémorisation **UTM** et comme identifiant de bouquet **BU**. Cette clé d'encryptage **KE** est déterminée en se servant au moins de l'identifiant de bouquet **BU** et de l'identifiant d'unité de traitement et de mémorisation **UTM**.

Le programme serveur encrypte ensuite, au moins en partie, la réponse à la requête d'accès à la ressource à accès restreint en utilisant la clé d'encryptage **KE**, de manière à obtenir une réponse cryptée **RP₂.** Le programme serveur renvoie ensuite au programme client cette réponse cryptée **RP₂.**

Dans l'exemple illustré, le programme serveur détecte dans la requête **RQ₂,** d'une part, la présence d'un identifiant d'unité de traitement et de mémorisation **UTM**, à savoir **UTM** = 234 et, d'autre part, un identifiant de bouquet **BU**, à savoir **B₂**. Comme il se trouve que la requête **RQ₂** correspond à une demande d'accès à une ressource à accès restreint, le programme serveur détermine que l'accès est autorisé grâce au moins à l'identifiant de service **S₄**, à l'identifiant de bouquet **B₂** et à l'identifiant d'unité de traitement et de mémorisation 234. Le programme serveur détermine alors la clé d'encryptage **KE** en se servant au moins de l'identifiant de bouquet **B₂** et de l'identifiant d'unité de traitement et de mémorisation 234. Par exemple, la clé d'encryptage **KE** est égale à 56789. Le programme serveur encrypte grâce à cette clé **KE**, au moins en partie la réponse à la requête d'accès **RQ₂**.

Comme expliqué en relation de la **fig. 3**, lorsque le programme client reçoit la réponse cryptée **RP₂**, le programme client décrypte cette réponse cryptée à l'aide de la clé de décryptage **KD** contenue dans l'unité de traitement et de mémorisation qui lui est reliée. Le programme client présente alors à l'utilisateur, la réponse à sa requête comme si elle lui était arrivée non cryptée.

Tel que cela ressort de la description qui précède, le procédé selon l'invention permet d'authentifier de manière simple et sûre, grâce à la mise en oeuvre d'unités de traitement et de mémorisation, un utilisateur souhaitant accéder à des ressources à accès restreint de services interactifs appartenant à un ou plusieurs bouquets de services.

Selon une caractéristique de mise en oeuvre de l'invention, le procédé peut permettre de relier simultanément plusieurs unités de traitement et de mémorisation **30₁,** avec **1** variant de 1 à L, à la machine cliente **20** d'un utilisateur. Selon cette variante de réalisation, le procédé selon l'invention est modifié de la manière suivante.

Le programme client est adapté pour lire, dans chacune des unités de traitement et de mémorisation qui lui sont reliées :
- l'identifiant de bouquet **BU₁**,
- et l'identifiant d'unité de traitement et de mémorisation **UTM₁**.

Lorsque le programme client émet une requête vers un service ayant comme identifiant de service **Sᵢ**, le programme client détermine s'il a mémorisé au moins une relation entre l'identifiant du service concerné **Sᵢ** et un identifiant de bouquet **BSⱼ.** Dans le cas où un identifiant de bouquet **BSⱼ** est trouvé, le programme client compare cet identifiant de bouquet **BSⱼ** avec les identifiants de bouquets **BU₁** venant des unités de traitement et de mémorisation.

Si une égalité est trouvée, le programme client rajoute à la requête émise, l'identifiant de l'unité de traitement et de mémorisation **UTM₁** ayant vérifié l'égalité.

Lorsque le programme client émet une requête vers un service ayant un identifiant de service **Sᵢ** et pour lequel il a mémorisé au moins deux identifiants de bouquets **BSⱼ,** le programme client compare les identifiants de bouquets **BSⱼ** avec les identifiants de bouquets venant des unités de traitement et de mémorisation **BU₁.**

S'il y a au moins une égalité, le programme client :
- choisit l'une des unités de traitement et de mémorisation ayant vérifié une égalité,
- et rajoute à la requête émise par le programme client, l'identifiant de l'unité de traitement et de mémorisation choisi **UTM₁** et l'identifiant de bouquet **BU₁** correspondant.

Lorsque le programme client reçoit une réponse cryptée, le programme client doit retrouver quelle est l'unité de traitement et de mémorisation dont l'identifiant **UTM₁** a été transmis lors de la requête correspondante à cette réponse. Les trois implémentations préférées suivantes sont possibles :
- le programme client mémorise l'identifiant de l'unité de traitement et de mémorisation qui est transmis lors d'une requête et est capable de retrouver cet identifiant lors de la réponse.
- le programme serveur renvoie au programme client dans la réponse, l'identifiant de l'unité de traitement et de mémorisation **UTM₁** reçu dans la requête, permettant ainsi au programme client de retrouver cet identifiant.
- le programme client questionne chacune des unités de traitement et de mémorisation, afin de retrouver l'unité de traitement et de mémorisation à utiliser.

Lorsque l'unité de traitement et de mémorisation est retrouvée, le programme client décrypte la réponse cryptée avec l'aide de la clé de décryptage **KD₁** contenue dans l'unité de traitement et de mémorisation ainsi retrouvée.

Dans la description qui précède, le procédé vise à déterminer si l'utilisateur est habilité à accéder à une ressource à accès restreint. Il doit être considéré que cette détermination peut être réalisée :
- soit uniquement par l'intermédiaire du programme serveur,
- soit par l'intermédiaire du programme serveur aidé d'un programme auxiliaire délocalisé.

Ce programme auxiliaire délocalisé peut se trouver sur une machine distincte de la machine serveur pour un service. Selon une réalisation préférée, il peut être prévu de rassembler les programmes auxiliaires délocalisés de tous les services d'un bouquet sur une même machine, afin de centraliser la gestion des habilitations d'accès.

Dans la description qui précède, le procédé consiste à déterminer la clé d'encryptage **KE**. Il est à noter que la détermination de cette clé d'encryptage KE peut être effectuée :
- soit uniquement par l'intermédiaire du programme serveur,
- soit par l'intermédiaire d'un programme serveur aidé d'un programme auxiliaire délocalisé.

Selon une variante de réalisation de l'invention, la clé d'encryptage KE peut être déterminée :
- soit par l'intermédiaire du programme serveur associé à une unité de traitement et de mémorisation,
- soit par l'intermédiaire du programme serveur se servant d'un programme auxiliaire délocalisé et d'une unité de traitement et de mémorisation.

Selon une autre variante de réalisation de l'invention, il peut être prévu d'associer pour chaque unité de traitement et de mémorisation :
- au moins un compteur permettant de comptabiliser les accès à des ressources à accès restreint, effectués par l'utilisateur possédant une unité de traitement et de mémorisation,
- et un seuil pour ce compteur.

Chaque programme serveur pour un service qui reçoit une requête pour une ressource à accès restreint, consulte la valeur du compteur et du seuil associé à l'unité de traitement et de mémorisation ayant servi à envoyer la requête, de manière à déterminer si cette requête doit être servie ou non. Si la requête est servie, le programme serveur met éventuellement à jour la valeur du compteur.

Selon une variante préférée de réalisation de l'invention, le compteur est situé dans une machine qui centralise la gestion du comptage des accès aux ressources à accès restreint.

Selon une autre variante de réalisation de l'invention, chaque unité de traitement et de mémorisation intègre ou comporte :
- un compteur permettant de comptabiliser l'usage de la clé de décryptage **KD**,
- et un seuil pour ce compteur.

Un tel compteur est mis à jour à chaque usage de la clé de décryptage **KD** et le décryptage des réponses cryptées reçues par le programme client est interdit lorsque le compteur atteint ou dépasse le seuil.

## Revendications

1. - Procédé pour restreindre, au profit d'utilisateurs autorisés, l'accès à au moins une ressource appartenant à au moins un service interactif d'au moins un bouquet de services, chaque utilisateur disposant d'une machine cliente (**20**) apte à exécuter un programme client adapté pour échanger à partir d'un réseau de transmission (**3**), des données avec un programme serveur associé à chaque service interactif possédant un identifiant de service (**Sᵢ**) (avec i variant de 1 à I), l'accès à une ressource étant assuré par une requête émise par le programme client vers le programme serveur qui traite cette requête et renvoie au programme client la réponse à la requête,
**caractérisé en ce qu'**il comporte les étapes suivantes :
→ pour chaque bouquet, relier, une unité de traitement et de mémorisation (**30**) à la machine cliente (**20**) de l'utilisateur lorsque ce dernier souhaite accéder à au moins une ressource à accès restreint, l'unité de traitement et de mémorisation comportant :
- un identifiant de bouquet (**BU**) permettant de déterminer le bouquet auquel appartient l'unité de traitement et de mémorisation,
- un identifiant d'unité de traitement et de mémorisation (**UTM**) permettant de caractériser l'unité de traitement et de mémorisation mis à la disposition de l'utilisateur,
- et une clé de décryptage (**KD**) permettant le décryptage d'informations en provenance d'un service du bouquet,
→ permettre à chaque programme client, de lire dans l'unité de traitement et de mémorisation (**30**) qui lui est reliée :
• l'identifiant de bouquet (**BU**),
• et l'identifiant d'unité de traitement et de mémorisation (**UTM**),
→ envoyer par chaque programme serveur pour un service, au moins une fois à tout programme client qui lui a adressé une requête pour ce service, une liste d'identifiants de bouquets (**BSⱼ**), 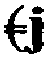 variant de 1 à 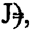 permettant de déterminer à quel(s) bouquet(s) appartient le service auquel la requête a été adressée,
→ mémoriser par chaque programme client qui reçoit une liste d'identifiants de bouquets **(BSⱼ)** en réponse à une requête pour un service ayant comme identifiant de service **(Sᵢ),** une relation entre chaque identifiant de bouquet **(BSⱼ)** et l'identifiant du service concerné **(Sᵢ),**
→ déterminer, lors de l'émission d'une requête vers un service possédant un identifiant de service **(Sᵢ),** si le programme client a mémorisé au moins une relation entre un identifiant de bouquet **(BSⱼ)** et l'identifiant du service concerné **(Sᵢ),** et dans le cas où :
- un identifiant de bouquet **(BSⱼ)** est trouvé, à comparer cet identifiant de bouquet **(BSⱼ)** avec l'identifiant de bouquet venant de l'unité de traitement et de mémorisation (**BU**) et s'il y a égalité, à rajouter à la requête émise par le programme client, l'identifiant de l'unité de traitement et de mémorisation **(UTM),**
→ lorsqu'un programme serveur reçoit une requête pour un service contenant un identifiant d'unité de traitement et de mémorisation **(UTM)** et qui demande d'accéder à une ressource à accès restreint, déterminer en utilisant au moins l'identifiant du service concerné (Sᵢ) et l'identifiant d'unité de traitement et de mémorisation **(UTM),** si l'utilisateur possédant l'unité de traitement et de mémorisation est habilité à accéder à ladite ressource, et si l'utilisateur :
- n'est pas habilité à accéder à la ressource, à renvoyer au programme client par le programme serveur, une réponse correspondant à un accès refusé,
- est habilité à accéder à la ressource :
• à déterminer en se servant au moins de l'identifiant d'unité de traitement et de mémorisation **(UTM),** la clé d'encryptage **(KE)** correspondant à la clé de décryptage (**KD**) contenue dans l'unité de traitement et de mémorisation reliée à la machine cliente de l'utilisateur ayant envoyé la requête,
• à encrypter par le programme serveur, au moins en partie, la réponse à la requête d'accès à la ressource à accès restreint en utilisant la clé d'encryptage **(KE),** de manière à obtenir une réponse cryptée,
• et à renvoyer au programme client par le programme serveur, cette réponse cryptée,
→ et lorsqu'un programme client reçoit une réponse cryptée :
- décrypter la réponse cryptée reçue par le programme client en utilisant la clé de décryptage (KD) contenue dans l'unité de traitement et de mémorisation qui lui est reliée,
- et présenter à l'utilisateur la réponse à sa requête, comme si celle-ci lui était arrivée non cryptée.

2. - Procédé selon la revendication 1, **caractérisé en ce qu'**il consiste:
→ à déterminer, lors de l'émission d'une requête vers un service, si le programme client a mémorisé au moins une relation entre un identifiant de bouquet (**BSⱼ**) et l'identifiant du service concerné (**Sᵢ**), et dans le cas où :
- plusieurs identifiants de bouquets (**BSⱼ**) sont trouvés, à comparer ces identifiants de bouquets (**BSⱼ**) avec l'identifiant de bouquet venant de l'unité de traitement et de mémorisation (**BU**) et si une égalité est trouvée, à rajouter l'identifiant de bouquet (**BU**) à la requête émise par le programme client et contenant déjà l'identifiant de l'unité de traitement et de mémorisation **(UTM),**
→ lorsqu'un programme serveur reçoit une requête pour un service contenant un identifiant d'unité de traitement et de mémorisation **(UTM)** et un identifiant de bouquet **(BU)** et qui demande d'accéder à une ressource à accès restreint, à déterminer en utilisant au moins l'identifiant de bouquet (**BU**), l'identifiant du service concerné (**Sᵢ**) et l'identifiant de l'unité de traitement et de mémorisation (**UTM**) si l'utilisateur possédant l'unité de traitement et de mémorisation est habilité à accéder à ladite ressource, et si l'utilisateur :
- n'est pas habilité à accéder à la ressource, à renvoyer au programme client par le programme serveur, une réponse correspondant à un accès refusé,
- est habilité à accéder à la ressource :
• à déterminer en se servant au moins de l'identifiant de bouquet **(BU)** et de l'identifiant d'unité de traitement et de mémorisation (**UTM**), la clé d'encryptage (**KE**) correspondant à la clé de décryptage **(KD)** contenue dans l'unité de traitement et de mémorisation reliée à la machine cliente de l'utilisateur ayant envoyé la requête,
• à encrypter par le programme serveur, au moins en partie, la réponse à la requête d'accès à la ressource à accès restreint en utilisant la clé d'encryptage (**KE**), de manière à obtenir une réponse cryptée,
• et à renvoyer au programme client par le programme serveur, cette réponse cryptée.

3. - Procédé selon les revendications 1 ou 2, **caractérisé en ce qu'**il consiste :
→ à permettre de relier simultanément plusieurs unités de traitement et de mémorisation (**30₁**), 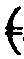 avec **1** variant de 1 à L 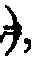 à la machine cliente d'au moins un utilisateur,
→ à permettre à chaque programme client de lire dans chacune des unités de traitement et de mémorisation qui lui sont reliées :
- l'identifiant de bouquet **(BU₁),**
- l'identifiant d'unité de traitement et de mémorisation **(UTM₁),**
→ à déterminer lors de l'émission d'une requête vers un service possédant un identifiant de service **(Sᵢ),** si le programme client a mémorisé au moins une relation entre un identifiant de bouquet **(BSⱼ)** et l'identifiant du service concerné **(Sᵢ),** et dans le cas où :
- un identifiant de bouquet **(BSⱼ)** est trouvé, à comparer cet identifiant de bouquet **(BSⱼ)** avec les identifiants de bouquets venant des unités de traitement et de mémorisation **(BU₁)** et s'il y a une égalité, à rajouter à la requête émise par le programme client, l'identifiant de l'unité de traitement et de mémorisation (**UTM₁**) ayant vérifié cette égalité,
- plusieurs identifiants de bouquet (**BSⱼ**) sont trouvés, à comparer ces identifiants de bouquet (**BSⱼ**) avec les identifiants de bouquets venant des unités de traitement et de mémorisation (**BU₁**) et s'il y a au moins une égalité :
+ à choisir l'une des unités de traitement et de mémorisation ayant vérifié une égalité,
+ et à rajouter à la requête émise par le programme client, l'identifiant de l'unité de traitement et de mémorisation choisie **(UTM₁)** et l'identifiant de bouquet **(BU₁)** correspondant,
→ lorsqu'un programme client reçoit une réponse cryptée :
- à retrouver quelle est l'unité de traitement et de mémorisation dont l'identifiant **(UTM₁)** a été transmis lors de la requête correspondante à cette réponse,
- à décrypter la réponse cryptée reçue par le programme client en utilisant la clé de décryptage **(KD₁)** contenue dans l'unité de traitement et de mémorisation ainsi retrouvée.

4. - Procédé selon la revendication 1 ou 2, **caractérisé en ce qu'**il consiste à déterminer si l'utilisateur est habilité à accéder à une ressource à accès restreint :
- soit uniquement par l'intermédiaire du programme serveur,
- soit par l'intermédiaire du programme serveur se servant d'un programme auxiliaire délocalisé.

5. - Procédé selon la revendication 1 ou 2, **caractérisé en ce qu'**il consiste à déterminer la clé d'encryptage **(KE) :**
- soit uniquement par l'intermédiaire du programme serveur,
- soit par l'intermédiaire du programme serveur se servant d'un programme auxiliaire délocalisé.

6. - Procédé selon la revendication 5, **caractérisé en ce qu'**il consiste à déterminer la clé d'encryptage **(KE) :**
- soit par l'intermédiaire du programme serveur et d'une unité de traitement et de mémorisation,
- soit par l'intermédiaire du programme serveur se servant d'un programme auxiliaire délocalisé et d'une unité de traitement et de mémorisation.

7. - Procédé selon l'une des revendications 1 à 6, **caractérisé en ce qu'**il consiste :
→ à associer pour chaque unité de traitement et de mémorisation :
- au moins un compteur permettant de comptabiliser les accès à des ressources à accès restreint effectué par l'utilisateur possédant cette unité de traitement et de mémorisation,
- un seuil pour ce compteur,
→ à permettre à chaque programme serveur pour un service, qui reçoit une requête pour une ressource à accès restreint :
- de consulter la valeur du compteur et du seuil associé à l'unité de traitement et de mémorisation ayant servi à envoyer la requête, de manière à déterminer si cette requête doit être servie ou non,
- et si la requête est servie, à éventuellement mettre à jour la valeur du compteur.

8. - Procédé selon l'une des revendications 1 à 6, **caractérisé en ce qu'**il consiste :
- à intégrer dans chaque unité de traitement et de mémorisation :
• un compteur permettant de comptabiliser l'usage de la clé de décryptage (**KD**),
• un seuil pour ce compteur,
- à mettre à jour le compteur à chaque usage de la clé de décryptage (**KD**),
- et à interdire le décryptage des réponses cryptées reçues par le programme client en utilisant la clé de décryptage (**KD**), lorsque le compteur atteint le seuil.

9. - Unité de traitement et de mémorisation permettant à un utilisateur d'accéder, par une machine cliente du type ordinateur, à au moins une machine serveur donnant accès à au moins un service interactif faisant partie d'au moins un bouquet de services, **caractérisée en ce qu'**elle comporte au moins :
- des moyens de mémorisation d'un identifiant de bouquet (**BU**) permettant de déterminer le bouquet auquel appartient l'unité de traitement et de mémorisation,
- des moyens de mémorisation d'un identifiant d'unité de traitement et de mémorisation (**UTM**) permettant de caractériser l'unité de traitement et de mémorisation mis à la disposition de l'utilisateur,
- et des moyens de mémorisation d'une clé de décryptage (**KD**) permettant le décryptage d'informations en provenance d'un service du bouquet.

10. - Unité de traitement et de mémorisation selon la revendication 9, **caractérisée en ce qu'**elle comporte :
- des moyens de mémorisation d'un compteur permettant de comptabiliser l'usage de la clé de décryptage **(KD),**
- des moyens de mémorisation d'un seuil pour ce compteur.

11. - Machine cliente du type ordinateur échangeant des données avec une unité de traitement et de mémorisation (**30**) et via un réseau de transmission (**3**), avec au moins une machine serveur donnant accès à au moins un service interactif faisant partie d'au moins un bouquet de services, **caractérisée en ce qu'**elle comporte des moyens pour mettre en oeuvre le procédé conforme à la revendication 1, comportant :
- des moyens de lecture dans l'unité de traitement et de mémorisation (**30**), d'un identifiant d'un bouquet de service (**BU**), d'un identifiant de l'unité de traitement et de mémorisation (**UTM**) et d'une clé de décryptage (**KD**),
- des moyens pour transmettre à la machine serveur, des requêtes d'accès à un service d'un bouquet dont au moins l'une des requêtes comporte l'identifiant de l'unité de traitement et de mémorisation, et éventuellement d'un identifiant d'un bouquet de service (**BU**),
- des moyens pour recevoir de la machine serveur, une liste d'identifiants de bouquets (**BSⱼ**) pour les services et une réponse cryptée (**RP₂**),
- des moyens de mémorisation d'une relation entre l'identifiant du service (**Sᵢ**) auquel la requête est adressée et chaque identifiant de bouquet (**BSⱼ**),
- des moyens de comparaison entre l'identifiant de bouquet (**BSⱼ**) reçu de la machine serveur et l'identifiant de bouquet (**BU**) issu de l'unité de traitement et de mémorisation,
- et des moyens pour décrypter à l'aide de la clé de décryptage (**KD**), la réponse cryptée (**RP₂**).

12. - Machine serveur donnant accès à au moins un service interactif faisant partie d'au moins un bouquet de services et échangeant des données via un réseau de transmission (**3**), avec au moins une machine cliente reliée à une unité de traitement et de mémorisation (**30**), **caractérisé en ce qu'**elle comporte des moyens pour mettre en oeuvre le procédé conforme à la revendication 1, comportant :
- des moyens de mémorisation d'une liste d'identifiants de bouquets **(BSⱼ)** permettant de déterminer à quel(s) bouquet(s) appartient chaque service interactif,
- des moyens de mémorisation d'une liste d'identifiants d'unité de traitement et de mémorisation (**UTM**) autorisés pour l'accès aux services,
- des moyens pour recevoir de la machine cliente, des requêtes d'accès à un service d'un bouquet et dont au moins l'une des requêtes comporte l'identifiant de l'unité de traitement et de mémorisation (**UTM**) reliée à la machine cliente, et éventuellement l'identifiant d'un bouquet de service (**BU**),
- des moyens pour déterminer l'autorisation ou le refus d'accéder au service demandé en utilisant au moins l'identifiant de service, les identifiants de l'unité de traitement et de mémorisation (**UTM**) reçu et mémorisé, et éventuellement l'identifiant de bouquet de service (**BU**),
- des moyens pour encrypter au moins en partie, la réponse à la requête d'accès, en utilisant une clé d'encryptage (**KE**) déterminée en se servant de l'identifiant d'unité de traitement et de mémorisation (**UTM**) et éventuellement de l'identifiant de bouquet (**BU**), et éventuellement l'identifiant de bouquet (**BU**),
- et des moyens pour transmettre à la machine serveur, la liste d'identifiants de bouquets (**BSⱼ**) et la réponse cryptée en cas d'autorisation d'accès au service demandé.

13. - Programme client d'accès à au moins une ressource à accès restreint appartenant à au moins un service interactif, comprenant des instructions pour effectuer les étapes du procédé conforme à l'une des revendications 1 à 8, lorsque ledit programme client est exécuté sur une machine cliente **(20).**

14. - Programme serveur pour service interactif comprenant des instructions pour effectuer les étapes du procédé conforme à l'une des revendications 1 à 8, lorsque ledit programme serveur est exécuté sur une machine serveur (**30**).

## Claims

1. - Process to restrict, to the benefit of authorized users, access to at least one resource belonging to at least one interactive service of at least one cluster of services, each user having a client machine (20) capable of executing a client program to exchange from a transmission network (3), data with a server program associated to each interactive service which has a service identifier (Sᵢ) (with i varying from 1 to I), access to a resource being provided by a request sent by the client program to the server program which processes said request and returns to the client program the response to the request,
**characterised in that** it includes the following steps:
→ for each cluster, linking up a processing and memorizing unit (30) to the client machine (20) of the user when he wishes to access at least one restricted access resource, the processing and memorizing unit including:
- a cluster identifier (BU) enabling to determine the cluster to which the processing and memorizing unit belongs,
- a processing and memorizing unit identifier (UTM) enabling to characterize the processing and memorizing unit put at the user's disposal,
- and a decryption key (KD) enabling the decrypting of information coming from a service of the cluster,
→ enabling each client program, to read in the processing and memorizing unit (30) which is linked up to it:
• the cluster identifier (BU),
• and the processing and memorizing unit identifier (UTM),
→ sending by each server program for a service, at least once to any client program which has submitted a request to it for said service, a list of clusters identifiers (BSⱼ), (j varying from 1 to J) enabling to determine to which cluster(s) belongs the service to which the request was submitted,
→ memorizing by each client program which receives a list of clusters identifiers (BSⱼ) in response to a request for a service having as service identifier (Sᵢ), a relation between each cluster identifier (BSⱼ) and the identifier of the concerned service (Sᵢ),
→ determining, at the time of the sending of a request to a service which has a service identifier (Sᵢ), if the client program has memorized at least one relation between a cluster identifier (BSⱼ) and the identifier of the concerned service (Sᵢ), and in the case where:
- a cluster identifier (BSⱼ) is found, comparing said cluster identifier (BSⱼ) with the cluster identifier (BU) coming from the processing and memorizing unit and if they are equal, adding to the request sent by the client program, the processing and memorizing unit identifier (UTM),
→ when a server program receives a request for a service containing a processing and memorizing unit identifier (UTM) and which requests to access a restricted access resource, determining by using at least the identifier of the concerned service (Sᵢ) and the processing and memorizing unit identifier (UTM), if the user who owns the processing and memorizing unit is entitled to access said resource, and if the user:
- is not entitled to access the resource, returning to the client program by the server program, a response corresponding to a refused access,
- is entitled to access the resource:
• determining using at least the processing and memorizing unit identifier (UTM), the encryption key (KE) corresponding to the decryption key (KD) contained in the processing and memorizing unit linked up to the client machine of the user who has sent the request,
• encrypting by the server program, at least in part, the response to the request of access to the restricted access resource using the encryption key (KE), so as to obtain an encrypted response,
• and returning to the client program by the server program, said encrypted response,
→ and when a client program receives an encrypted response:
- decrypting the encrypted response received by the client program using the decryption key (KD) contained in the processing and memorizing unit linked up to it,
- and presenting the user with the response to his request, as if said request had reached him non encrypted.

2. - Process according to claim 1, **characterised in that** it comprises:
→ determining, at the time of the sending of a request to a service, if the client program has memorized at least one relation between a cluster identifier (BSⱼ) and the identifier of the concerned service (Sᵢ), and in the case where:
- several clusters identifiers (BSⱼ) are found, comparing said clusters identifiers (BSⱼ) with the cluster identifier (BU) coming from the processing and memorizing unit and if an equality is found, adding the cluster identifier (BU) to the request sent by the client program and already containing the processing and memorizing unit identifier (UTM),
→ when a server program receives a request for a service containing a processing and memorizing unit identifier (UTM) and a cluster identifier (BU) and which requests to access a restricted access resource, determining by using at least the cluster identifier (BU), the identifier of the concerned service (Sᵢ) and the processing and memorizing unit identifier (UTM) if the user who owns the processing and memorizing unit is entitled to access said resource, and if the user:
- is not entitled to access the resource, returning to the client program by the server program, a response corresponding to a refused access,
- is entitled to access the resource:
• determining using at least the cluster identifier (BU) and the processing and memorizing unit identifier (UTM), the encryption key (KE) corresponding to the decryption key (KD) contained in the processing and memorizing unit linked up to the client machine of the user who has sent the request,
• encrypting by the server program, at least in part, the response to the request of access to the restricted access resource using the encryption key (KE), so as to obtain an encrypted response,
• and returning to the client program by the server program, said encrypted response.

3. - Process according to claim 1 or claim 2, **characterised in that** it comprises:
→ enabling to link up simultaneously several processing and memorizing units (30₁), (with 1 varying from 1 to L), to the client machine of at least one user,
→ enabling each client program to read in each of the processing and memorizing units which are linked up to it:
- the cluster identifier (BU₁),
- the processing and memorizing unit identifier (UTM₁),
→ determining at the time of the sending of a request to a service having a service identifier (Sᵢ), if the client program has memorized at least one relation between a cluster identifier (BSⱼ) and the concerned service identifier (S₁) and in the case where:
- a cluster identifier (BSⱼ) is found, comparing said cluster identifier (BSⱼ) with the clusters identifiers (BU₁) coming from the processing and memorizing units and if an equality is found, adding to the request sent by the client program, the processing and memorizing unit identifier (UTM₁) having checked said equality,
- several clusters identifiers (BSⱼ) are found, comparing said clusters identifiers (BSⱼ) with the clusters identifiers (BU₁) coming from the processing and memorizing units and if at least one equality is found:
+ choosing one of the processing and memorizing units having checked an equality,
+ and adding to the request sent by the client program, the chosen processing and memorizing unit identifier (UTM₁) and the corresponding cluster identifier (BU₁),
→ when a client program receives an encrypted response:
- finding the processing and memorizing unit whose identifier (UTM₁) has been transmitted during the request corresponding to said response,
- decrypting the encrypted response received by the client program using the decryption key (KD₁) contained in the processing and memorizing unit thus found.

4. - Process according to claim 1 or claim 2, **characterised in that** it comprises determining whether or not the user is entitled to access a restricted access resource:
- either only through the server program,
- or through the server program using a remote auxiliary program.

5. - Process according to claim 1 or claim 2, **characterised in that** it comprises determining the encryption key (KE):
- either only through the server program,
- or through the server program using a remote auxiliary program.

6. - Process according to claim 5, **characterised in that** it comprises determining the encryption key (KE):
- either through the server program and a processing and memorizing unit,
- or through the server program using a remote auxiliary program and a processing and memorizing unit.

7. - Process according to one of claims 1 to 6, **characterised in that** it comprises:
→ associating to each processing and memorizing unit:
- at least one meter enabling to count accesses to restricted access resources made by the user owning said processing and memorizing unit,
- a threshold for said meter,
→ enabling each server program for a service, which receives a request of access to a restricted access resource:
- to consult the values of the meter and threshold associated to the processing and memorizing unit used to send the request, so as to determine whether said request should be served or not,
- and if the request is served, to possibly update the meter's value.

8. - Process according to one of claims 1 to 6, **characterised in that** it comprises:
- integrating to each processing and memorizing unit:
• a meter enabling to count the use of the decryption key (KD),
• a threshold for said meter,
- updating the meter every time the decryption key (KD) is used,
- and forbidding the decrypting of the encrypted responses received by the client program using the decryption key (KD), when the meter reaches the threshold.

9. - Processing and memorizing unit enabling a user to access, by means of a client machine of the computer type, at least one server machine enabling access to at least one interactive service belonging to at least one cluster of services, said unit being **characterised in that** it includes at least:
- means for memorizing a cluster identifier (BU) enabling to determine the cluster to which the processing and memorizing unit belongs,
- means for memorizing a processing and memorizing unit identifier (UTM) enabling to characterize the processing and memorizing unit put at the user's disposal, and
- means for memorizing a decryption key (KD) enabling the decrypting of information coming from a service of the cluster.

10. - Processing and memorizing unit according to claim 9, **characterised in that** it includes:
- means for memorizing a meter enabling to count the use of the decryption key (KD),
- means for memorizing a threshold for said meter.

11. - Client machine of the computer type exchanging data with a processing and memorizing unit (30) via a transmission network (3), with at least one server machine enabling access to at least one interactive service being part of at least one cluster of services, the machine being **characterised in that** it includes means for implementing the process in accordance with claim 1, which includes:
- means for reading in the processing and memorizing unit (30), a service cluster identifier (BU), a processing and memorizing unit identifier (UTM) and a decryption key (KD),
- means for sending to the server machine, requests to access a service of a cluster one request of which at least contains the processing and memorizing unit identifier, and optionally a service cluster identifier (BU),
- means for receiving from the server machine, a list of clusters identifiers (BSⱼ) for the services and an encrypted response (RP₂),
- means for memorizing a relation between the service identifier (S₁) to which the request is submitted and each cluster identifier (BSⱼ),
- means for comparing the cluster identifier (BSⱼ) as received from the server machine with the cluster identifier (BU) coming from the processing and memorizing unit, and
- means for decrypting the encrypted response (RP₂) using the decryption key (KD).

12. - Server machine enabling access to at least one interactive service being part of at least one cluster of services and exchanging data via a transmission network (3), with at least one client machine linked up to a processing and memorizing unit (30), the machine being **characterised in that** it includes means for implementing the process in accordance with claim 1, which includes:
- means for memorizing a list of clusters identifiers (BSⱼ) enabling to determine the cluster to which each interactive service belongs,
- means for memorizing a list of processing and memorizing unit identifiers (UTM) as authorized to access the services,
- means for receiving from the client machine, requests to access a service of a cluster one request of which at least contains the processing and memorizing unit identifier (UTM) linked up to the client machine, and optionally the service cluster identifier (BU),
- means for determining whether or not the requested service is authorized or refused access using at least the service identifier, the processing and memorizing unit identifiers (UTM) as received and memorized, and optionally the service cluster identifier (BU),
- means for encrypting at least in part, the response to the access request, using a determined encryption key (KE) by using the processing and memorizing unit identifier (UTM) and optionally the cluster identifier (BU), and
- means for sending to the server machine, the list of clusters identifiers (BSⱼ) and the encrypted response when the requested service is authorised access.

13. - Client program to access at least one restricted access resource belonging to at least one interactive service, comprising instructions to carry out the steps of the process in accordance with one of claims 1 to 8, when said client program is executed on a client machine (20).

14. - Server program for interactive service comprising instructions to carry out the steps of the process in accordance with one of claims 1 to 8, when said server program is executed on a server machine (30).

## Patentansprüche

1. Verfahren zum Einschränken des Zugangs zu mindestens einer Ressource zugunsten befugter Benutzer, wobei die Ressource zumindest einem interaktiven Service mindestens eines Servicepakets gehört, wobei jeder Benutzer über eine Clientmaschine (20) verfügt, die ein Clientprogramm ausführen kann, das dazu ausgebildet ist, ausgehend von einem Sendenetzwerk (3) Daten mit einem Serverprogramm auszutauschen, das zu jedem interaktiven Service gehört, der einen Serviceidentifikator (Sᵢ) (wobei i von 1 bis I variiert) besitzt, wobei der Zugang zu einer Ressource durch eine Anfrage sichergestellt wird, die von dem Clientprogramm zu dem Serverprogramm gesendet wird, das diese Anfrage bearbeitet und dem Clientprogramm die Antwort auf die Anfrage zurücksendet,
**dadurch gekennzeichnet, daß** es die folgenden Schritte aufweist:
→ für jedes Paket Verbinden einer Verarbeitungs- und Speichereinheit (30) mit der Clientmaschine (20) des Benutzers, wenn Letzterer wünscht, auf mindestens eine Ressource mit beschränktem Zugang zuzugreifen, wobei die Verarbeitungs- und Speichereinheit folgendes aufweist:
- einen Identifikator für das Paket (BU), der es erlaubt, das Paket zu bestimmen, zu dem die Verarbeitungs- und Speichereinheit gehört,
- einen Identifikator der Verarbeitungs- und Speichereinheit (UTM), der es erlaubt, die Verarbeitungs- und Speichereinheit, die dem Benutzer zur Verfügung gestellt ist, zu charakterisieren,
- und einen Entschlüsselungscode (KD), der das Entschlüsseln von Informationen, die von einem Service des Pakets kommen, erlaubt,
→ es jedem Clientprogramm erlauben, in der Verarbeitungs- und Speichereinheit (30), die mit ihm verbunden ist, folgendes zu lesen:
• den Identifikator des Pakets (BU),
• und den Identifikator der Verarbeitungs- und Speichereinheit (UTM),
→ zumindest einmal Senden durch jedes Serverprogramm für einen Service an jedes Clientprogramm, das ihm eine Anfrage für diesen Service gesendet hat, einer Liste von Paketidentifikatoren (BSⱼ) (wobei j von 1 bis J variiert), die es erlaubt, zu bestimmen, zu welchem Paket oder zu welchen Paketen der Service, an den die Anfrage gerichtet wurde, gehört,
→ Speichern für jedes Clientprogramm, das eine Liste Paketidentifikatoren (BSⱼ) als Antwort auf eine Anfrage für einen Service empfängt, der als Serviceidentifikator (Sᵢ) hat, einer Beziehung zwischen jedem Paketidentifikator (BSj) und dem Identifikator (Sᵢ) des betreffenden Service,
→ beim Senden einer Anfrage zu einem Service, der einen Serviceidentifikator (Sᵢ) besitzt, Bestimmen, ob das Clientprogramm mindestens eine Beziehung zwischen einem Paketidentifikator (BSⱼ) und dem Identifikator (Sᵢ) des betreffenden Service gespeichert hat, und in dem Fall, in dem:
- ein Paketidentifikator (BSⱼ) gefunden wird, Vergleichen dieses Paketidentifikators (BSⱼ) mit dem Paketidentifikator, der von der Verarbeitungs- und Speichereinheit (MTU) kommt, und wenn Übereinstimmung besteht, Hinzufügen des Identifikators der Verarbeitungs- und Speichereinheit (UTM) zu der von dem Clientprogramm gesendeten Anfrage,
→ wenn ein Serverprogramm eine Anfrage für einen Service empfängt, die einen Identifikator für eine Verarbeitungs- und Speichereinheit (UTM) aufweist und um Zugang zu einer Ressource mit beschränktem Zugang anfragt, Bestimmen unter Einsatz mindestens des Identifikators (Sᵢ) des betreffenden Service und des Identifikators der Verarbeitungs- und Speichereinheit (UTM), ob der Benutzer, der die Verarbeitungs- und Speichereinheit besitzt, befugt ist, auf die Ressource zuzugreifen, und wenn der Benutzer:
- nicht befugt ist, auf die Ressource zuzugreifen, dem Clientprogramm durch das Serverprogramm eine Antwort zurückzusenden, die einem verweigertem Zugang entspricht,
- befugt ist, auf die Ressource zuzugreifen:
• Bestimmen unter Einsatz mindestens des Identifikators der Verarbeitungs- und Speichereinheit (UTM), des Verschlüsselungscodes (KE), der dem Entschlüsselungscode (KD) entspricht, der in der Verarbeitungs- und Speichereinheit enthalten ist, die mit der Clientmaschine des Benutzers, der die Anfrage gesendet hat, verbunden ist,
• Verschlüsseln durch das Serverprogramm zumindest zum Teil der Antwort auf die Anfrage um Zugang zu der Ressource mit beschränktem Zugang unter Einsatz des Verschlüsselungscodes (KE), so daß eine verschlüsselte Antwort erzielt wird,
• und Zurücksenden dieser verschlüsselten Antwort an das Clientprogramm durch das Serverprogramm,
→ und wenn ein Clientprogramm eine verschlüsselte Antwort erhält:
- Entschlüsseln der von dem Clientprogramm empfangenen verschlüsselten Antwort unter Einsatz des Entschlüsselungscodes (KD), der in der Verarbeitungs- und Speichereinheit, mit der es verbunden ist, enthalten ist,
- und Präsentieren der Antwort auf seine Anfrage für den Benutzer, als wäre diese unverschlüsselt angekommen.

2. Verfahren nach Anspruch 1, **dadurch gekennzeichnet, daß** es aus folgendem besteht:
→ beim Senden einer Anfrage zu einem Service bestimmen, ob das Clientprogramm zumindest eine Beziehung zwischen einem Paketidentifikator (BSⱼ) und dem Identifikator (Sᵢ) des betreffenden Service gespeichert hat und in dem Fall:
- daß mehrere Paketidentifikatoren (BSⱼ) gefunden werden, diese Paketidentifikatoren (BSⱼ) mit dem Identifikator des Service zu vergleichen, die von der Verarbeitungs- und Speichereinheit (UTM) kommt, und wenn eine Übereinstimmung gefunden wird, den Identifikator des Pakets (BU) zu der Anfrage hinzuzufügen, die von dem Clientprogramm gesendet wird und bereits den Identifikator der Verarbeitungs- und Speichereinheit (UTM) enthält,
→ wenn ein Serverprogramm eine Anfrage für einen Service empfängt, die einen Identifikator für eine Verarbeitungs- und Speichereinheit (UTM) und einen Paketidentifikator (BU) enthält und die um Zugang zu einer Ressource mit beschränktem Zugang anfragt, unter Einsatz zumindest des Identifikators des Pakets (BU) den betreffenden Serviceidentifikator (Sᵢ) und den Identifikator der Verarbeitungs- und Speichereinheit (UTM) zu bestimmen, wenn der Benutzer, der die Verarbeitungs- und Speichereinheit besitzt, befugt ist, auf diese Ressource zuzugreifen, und wenn der Benutzer:
- nicht befugt ist, auf die Ressource zuzugreifen, dem Clientprogramm durch das Serverprogramm eine Antwort zurücksenden, die einem verweigerten Zugang entspricht,
- zum Zugreifen auf die Ressource befugt ist:
• unter Einsatz zumindest des Paketidentifikators (BU) und des Identifikators einer Verarbeitungs- und Speichereinheit (UTM) den Verschlüsselungscode (KE) bestimmen, der dem Entschlüsselungscode (KD) entspricht, der in der Verarbeitungs- und Speichereinheit, die mit der Clientmaschine des Benutzers, der die Anfrage gesendet hat, verbunden ist, bestimmen,
• durch das Serverprogramm zumindest zum Teil die Antwort auf die Anfrage um Zugang zu der Ressource mit beschränktem Zugang unter Einsatz des Verschlüsselungscodes (KE) so verschlusseln, daß eine verschlüsselte Antwort erzielt wird,
• und dem Clientprogramm durch das Serverprogramm diese verschlüsselte Antwort zurücksenden.

3. Verfahren nach Anspruch 1 oder 2, **dadurch gekennzeichnet, daß** es aus folgendem besteht:
→ es erlauben, gleichzeitig mehrere Verarbeitungs- und Speichereinheiten (30ₗ) (wobei I von 1 bis L variiert) mit der Clientmaschine zumindest eines Benutzers zu verbinden,
→ es jedem Clientprogramm zu erlauben, in jeder der Verarbeitungs- und Speichereinheiten, die mit ihm verbunden sind, folgendes zu lesen:
- den Paketidentifikator (BU_{I}),
- den Identifikator der Verarbeitungs- und Speichereinheit (UTM_{I}),
→ beim Senden einer Anfrage nach einem Service, der einen Serviceidentifikator (Sᵢ) besitzt, bestimmen, ob das Clientprogramm zumindest eine Beziehung zwischen einem Paketidentifikator (BSⱼ) und dem Identifikator (Sᵢ) des betreffenden Service gespeichert hat, und in dem Fall:
- in dem ein Paketidentifikator (BSⱼ) gefunden wird, diesen Paketidentifikator (BSⱼ) mit den Paketidentifikatoren zu vergleichen, die von den Verarbeitungs- und Speichereinheiten (UTM₁) kommen, und wenn eine Übereinstimmung besteht, zu der von dem Clientprogramm gesendeten Anfrage den Identifikator der Verarbeitungs- und Speichereinheit (UTMₗ) hinzufügen, die diese Übereinstimmung geprüft hat,
- in dem mehrere Paketidentifikatoren (BSⱼ) gefunden werden, diese Paketidentifikatoren (BSⱼ) mit den Paketidentifikatoren vergleichen, die von den Verarbeitungs- und Speichereinheiten (UTMₗ) kommen, und wenn zumindest eine Übereinstimmung besteht:
+ eine der Verarbeitungs- und Speichereinheiten, die eine Übereinstimmung geprüft hat, auswählen,
+ und zu der von dem Clientprogramm gesendeten Anfrage den Identifikator der ausgewählten Verarbeitungs- und Speichereinheit (UTMₗ) und den entsprechenden Paketidentifikator (BUₗ) hinzufügen,
→ wenn ein Clientprogramm eine verschlüsselte Antwort empfängt:
- die Verarbeitungs- und Speichereinheit finden, deren Identifikator (UMTₗ) bei der dieser Antwort entsprechenden Anfrage gesendet wurde,
- die verschlüsselte Antwort, die das Clientprogramm empfangen hat, unter Einsatz des Entschlüsselungscodes (KDₗ), der in der Verarbeitungs- und Speichereinheit, die so wieder gefunden wurde, entschlüsseln.

4. Verfahren nach Anspruch 1 oder 2, **dadurch gekennzeichnet, daß** es darin besteht zu bestimmen, ob der Benutzer zum Zugreifen auf eine Ressource mit beschränktem Zugang befugt ist:
- entweder nur über das Serverprogramm,
- oder über das Serverprogramm, das ein dezentrales Hilfsprogramm verwendet.

5. Verfahren nach Anspruch 1 oder 2, **dadurch gekennzeichnet, daß** es darin besteht, den Verschlüsselungscode (KE) zu bestimmen:
- entweder nur über das Serverprogramm,
- oder über das Serverprogramm, das ein dezentrales Hilfsprogramm verwendet.

6. Verfahren nach Anspruch 5, **dadurch gekennzeichnet, daß** es darin besteht, den Verschlüsselungscode (KE) wie folgt zu bestimmen:
- entweder über das Serverprogramm und eine Verarbeitungs- und Speichereinheit,
- oder über das Serverprogramm, das ein dezentrales Hilfsprogramm und eine Verarbeitungs- und Speichereinheit verwendet.

7. Verfahren nach einem der Ansprüche 1 bis 6, **dadurch gekennzeichnet, daß** es aus folgendem besteht:
→ für jede Verarbeitungs- und Speichereinheit Verbinden von folgendem:
- mindestens eines Zählers, der es erlaubt, den Zugang zu Ressourcen mit beschränktem Zugang, die von dem Benutzer, der diese Verarbeitungs- und Speichereinheit besitzt, durchgeführt werden, zu verbuchen,
- einen Schwellenwert für diesen Zähler,
→ es jedem Serverprogramm für einen Service, das eine Anfrage um Zugang zu einer Ressource mit beschränktem Zugang erhält, zu erlauben:
- den Wert des Zählers und des Schwellenwerts, die mit der Verarbeitungs- und Speichereinheit, die zum Senden der Anfrage gedient hat, verbunden sind, so einzusehen, daß bestimmt werden kann, ob dieser Anfrage stattgegeben wird oder nicht,
- und, wenn der Anfrage stattgegeben wird, eventuell den Wert des Zählers zu aktualisieren.

8. Verfahren nach einem der Ansprüche 1 bis 6, **dadurch gekennzeichnet, daß** es aus folgendem besteht:
- Integrieren in jede Verarbeitungs- und Speichereinheit:
• eines Zählers, der es erlaubt, die Nutzung des Entschlüsselungscodes (KD) zu verbuchen,
• einen Schwellenwert für diesen Zähler,
- den Zähler bei jedem Gebrauch des Entschlüsselungscodes (KD) zu aktualisieren,
- und das Entschlüsseln der von dem Clientprogramm empfangenen verschlüsselten Antworten unter Einsatz des Entschlüsselungscodes (KD) zu verbieten, wenn der Zähler den Schwellenwert erreicht hat.

9. Verarbeitungs- und Speichereinheit, die es einem Benutzer erlaubt, durch eine Clientmaschine des Typs Computer auf mindestens eine Servermaschine zuzugreifen, die Zugang zu mindestens einem interaktiven Service erlaubt, der zu mindestens einem Servicepaket gehört, **dadurch gekennzeichnet, daß** sie mindestens folgendes aufweist:
- Mittel zum Speichern eines Paketidentifikators (BU), der es erlaubt, das Paket zu bestimmen, zu dem die Verarbeitungs- und Speichereinheit gehört,
- Mittel zum Speichern eines Identifikators einer Verarbeitungs- und Speichereinheit (UTM), die es erlauben, die Verarbeitungs- und Speichereinheit, die dem Benutzer zur Verfügung gestellt wird, zu charakterisieren,
- und Mittel zum Speichern eines Entschlüsselungscodes (KD), der das Entschlüsseln von Informationen erlaubt, die von einem Service des Pakets kommen.

10. Verarbeitungs- und Speichereinheit nach Anspruch 9, **dadurch gekennzeichnet, daß** sie folgendes aufweist:
- Mittel zum Speichern eines Zählers, der es erlaubt, den Gebrauch des Entschlüsselungscodes (KD) zu verbuchen,
- Mittel zum Speichern eines Schwellenwerts für diesen Zähler.

11. Clientmaschine des Typs Computer, die Daten mit einer Verarbeitungs- und Speichereinheit (30) und über ein Sendenetzwerk (3) mit mindestens einer Servermaschine austauscht, die Zugang zu mindestens einem interaktiven Service erlaubt, der zu mindestens einem Servicepaket gehört, **dadurch gekennzeichnet, daß** sie Mittel aufweist, um das Verfahren nach Anspruch 1 umzusetzen und folgendes aufweist:
- Mittel zum Lesen in der Verarbeitungs- und Speichereinheit (30) eines Identifikators eines Servicepakets (BU), eines Identifikators der Verarbeitungs- und Speichereinheit (UTM) und eines Entschlüsselungscodes (KD),
- Mittel zum Senden an die Servermaschine der Anfragen um Zugang zu einem Service eines Pakets, wobei mindestens eine der Anfragen den Identifikator der Verarbeitungs- und Speichereinheit aufweist und eventuell einen Identifikator eines Pakets (BU),
- Mittel zum Empfangen von der Servermaschine einer Liste von Identifikatoren von Paketen (BSⱼ) für die Services und einer verschlüsselten Antwort (RP₂),
- Mittel zum Speichern einer Beziehung zwischen dem Identifikator (Sᵢ) des Service, an den die Anfrage gerichtet ist, und jedem Paketidentifikator (BSⱼ),
- Mittel zum Vergleichen zwischen dem Paketidentifikator (BSⱼ), der von der Servermaschine empfangen wird, und dem Paketidentifikator (BU), der aus der Verarbeitungs- und Speichereinheit stammt,
- sowie Mittel zum Entschlüsseln der verschlüsselten Antwort (RP₂) mit Hilfe des Entschlüsselungscodes (KD).

12. Servermaschine, die Zugang zu mindestens einem interaktiven Service erlaubt, der zu mindestens einem Servicepaket gehört, und die Daten über ein Sendenetz (3) mit mindestens einer Clientmaschine austauscht, die mit einer Verarbeitungs- und Speichereinheit (30) verbunden ist, **dadurch gekennzeichnet, daß** sie Mittel aufweist, um das Verfahren nach Anspruch 1 umzusetzen, und folgendes aufweisend:
- Mittel zum Speichern einer Liste von Paketidentifikatoren (BSⱼ), die es erlauben zu bestimmen, zu welchem oder welchen Paket/en jeder interaktive Service gehört,
- Mittel zum Speichern einer Liste von Identifikatoren von Verarbeitungs-und Speichereinheiten (UTM), die zum Zugreifen auf die Services befugt sind,
- Mittel zum Empfangen von der Clientmaschine der Anfragen nach Zugang zu einem Service eines Pakets, und wobei zumindest eine der Anfragen den Identifikator der Verarbeitungs- und Speichereinheit (UTM) aufweist, die mit der Clientmaschine verbunden ist, und eventuell den Identifikator eines Pakets (BU),
- Mittel zum Bestimmen der Genehmigung oder der Verweigerung des Zugangs zu dem verlangten Service unter Einsatz zumindest des Serviceidentifikators, der Identifikatoren der empfangenen und gespeicherten Verarbeitungs- und Speichereinheit (UTM) und eventuell des Identifikators des Servicepakets (BU),
- Mittel zum zumindest teilweisen Verschlüsseln der Antwort auf die Zugangsanfrage unter Einsatz eines Verschlüsselungscodes (KE), der bestimmt wird, indem der Identifikator der Verarbeitungs- und Speichereinheit (UTM) verwendet wird, und eventuell der Identifikator des Servicepakets (BU),
- sowie Mittel zum Senden der Liste der Paketidentifikatoren (BSⱼ) und der verschlüsselten Antwort bei Genehmigung des Zugangs zu dem verlangten Service an die Servermaschine.

13. Clientprogramm zum Zugreifen auf mindestens eine Ressource mit beschränktem Zugang, die zu mindestens einem interaktiven Service gehört, das Anweisungen aufweist, um die Schritte des Verfahrens gemäß einem der Ansprüche 1 bis 8 durchzuführen, wenn das Clientprogramm auf einer Clientmaschine (20) ausgeführt wird.

14. Serverprogramm für interaktiven Service, das Anweisungen aufweist, um die Schritte des Verfahrens nach einem der Ansprüche 1 bis 8 durchzuführen, wenn das Serverprogramm auf einer Servermaschine (30) ausgeführt wird.
